# EUROPÄISCHE PATENTSCHRIFT

(11) **EP 0 850 161 B1**
(45) Veröffentlichungstag und Bekanntmachung des Hinweises auf die Patenterteilung: **09.01.2002**
(21) Anmeldenummer: 96923825.2
(22) Anmeldetag: 04.07.1996
(51) Int. Cl.: B60R 21/16

(54) **GASSACK, VERFAHREN ZU SEINER FALTUNG UND VORRICHTUNG ZUR DURCHFÜHRUNG DES FALTVERFAHRENS**
AIRBAG, METHOD OF FOLDING IT AND DEVICE FOR CARRYING OUT THE METHOD
COUSSIN GONFLABLE, PROCEDE ET DISPOSITIF DE PLIAGE ASSOCIES

(30) Priorität: 12.09.1995 DE 19535565
(43) Veröffentlichungstag der Anmeldung: 01.07.1998
(73) Patentinhaber: TAKATA - PETRI Aktiengesellschaft, 63743 Aschaffenburg (DE)
(72) Erfinder: MAROTZKE, Thomas, D-13187 Berlin (DE); PAUSCH, Tobias, D-13127 Berlin (DE)
(74) Vertreter: Bärmann, Klaus, Dipl.-Ing.
(86) Internationale Anmeldenummer: DE9601247
(87) Internationale Veröffentlichungsnummer: WO9710123

(56) Entgegenhaltungen:
- DE-A- 2 335 798
- DE-A- 4 422 276
- GB-A- 2 192 841
- US-A- 3 876 272
- US-A- 3 907 330
- US-A- 3 945 665
- US-A- 4 173 356

## Beschreibung

Die Erfindung betrifft ein Verfahren zur Faltung eines Gassackes nach dem Oberbegriff des Anspruchs 1 sowie eine Vorrichtung zur Durchführung des Faltverfahrens.

Aus der DE 44 22 276 A1 ist ein Gassack für einen Airbagmodul bekannt, bei dem der zusammengelegte Gassack Hauptfalten aufweist, die zumindest zu einem Teil entlang geschlossener Bahnen um ein gedachtes Zentrum auf dem im wesentlichen leeren, ausgebreiteten Luftsack herum verlaufen. Die geschlossenen Hauptfalten beschreiben vorzugsweise Kreisbahnen oder Ellipsen geringer Exzentrizität. Daneben sind Nebenfalten vorhanden, die beim Zusammenlegen des Gassackes willkürlich entstehen.

Dieser Verlauf der Hauptfalten weist den Vorteil auf, daß sich der gefaltete Gassäck sehr schnell und einfach öffnen kann. Insbesondere besteht beim Entfalten eines derartigen Gassackes nicht die Gefahr, daß der in Teilbereichen des Gassackes erzeugte Innendruck das Öffnen weiterer Falten behindert. Dabei ist dieser Gassack für Fahrer-, Beifahrer- und Seitenairbags einsetzbar. Der Nachteil dieser Faltung besteht darin, daß der Aufwand für die Faltung erheblich ist, insbesondere wenn die Faltung maschinell erfolgt.

Weiterhin ist aus der US 4 173 356 ein Gassack bekannt, der in Richtung des Einblasmundes zieharmonikaartig gefaltet ist. Die Hauptfalten verlaufen dabei entlang parallel verlaufender Geraden. Ein so gefalteter Gassack läßt sich ebenfalls schnell und einfach entfalten, wobei er in dieser Faltungsart wegen seiner langgestreckten Form, die für ein ausreichendes Volumen unerläßlich ist, nur für Beifahrer- oder Seiten-Airbags geeignet ist. Als Fahrerairbag könnte er nur verwendet werden, wenn die Enden umgeschlagen werden. Dann besteht aber wieder die Gefahr, daß der Innendruck das Öffnen einiger Falten behindert.

Aus der US-3 876 272 ist ein gattungsgemäßer Gassack bekannt, der bezüglich einer Längsachse mehrere innere und äußere Hauptfalten aufweist. Auch ein so gefalteter Gassack läßt sich schnell und einfach entfalten.

Aus der EP 0 443 485 A1 sind eine Vorrichtung und ein Verfahren zur Airbagfaltung bekannt, bei denen im Abstand zueinander angeordnete feststehende Faltbleche vorgesehen sind, zwischen die bewegliche Faltbleche eingreifen können. Der ausgebreitete Gassack ist unterhalb der feststehenden Faltbleche und oberhalb der beweglichen Faltbleche angeordnet. Die beweglichen Faltbleche werden dann unter Mitnahme des Gassacks gegenüber den Zwischenräumen der feststehenden Faltbleche positioniert und anschließend wird der Gassack durch das Einschieben der beweglichen Faltbleche in die genannten Zischenräume gefaltet.

Aus der US 5 162 035 ist eine Vorrichtung zur Faltung eines Airbags bekannt, bei der der ausgebreitete Gassack ähnlich wie bei der vorher beschriebenen Vorrichtung mittels Faltblechen gefaltet wird.

Der Erfindung liegt die Aufgabe zugrunde, bei einem universell einsetzbaren Gassack, der so gefaltet ist, daß der Innendruck das Öffnen von Falten nicht behindert, den Aufwand für die Faltung zu verringern.

Erfindungsgemäß wird das gemäß den kennzeichnenden Merkmalen des Ansprschs 1 erreicht.

Bei einem Verfahren zur Faltung eines Gassacks, der im gefalteten Zustand mindestens eine innere und eine äußere Hauptfalte aufweist, wobei die letztere in größerem Abstand zur Längsachse als die innere Hauptfalte verläuft, wird erfindungsgemäß der **im Bereich seines Einblasmundes** eingespannte Gassack **mittels eines durch den Einblasmund in den Gassack eingeführten Formkörpers** so vorgeformt, daß er sich in Richtung **der** Längsachse auf der Mantelfläche der vorgesehenen inneren Hauptfalte bzw. Hauptfalten erstreckt. Anschließend wird der Gassack im Bereich der vorgesehenen inneren Hauptfalte bzw. Hauptfalten fixiert und im Bereich der vorgesehenen äußeren Hauptfalte bzw. Hauptfalten **vom Formkörper weg** nach außen gedrückt oder gezogen. Dann wird der Gassack in Richtung seiner Einspannstelle zusammengedrückt.

Bei diesem Verfahren wird also zunächst die Lage der Mantelfläche der inneren Hauptfalte bzw. Hauptfalten festgelegt. Durch anschließendes Verschieben oder Ziehen der dort nicht fixierten Teile des Gassackes nach außen werden die äußeren Hauptfalten gebildet. Der Vorteil besteht darin, daß der Faltvorgang gut mechanisierbar und automatisierbar ist, wobei der technische Aufwand gegenüber bekannten Faltungen verringert ist. Weiterhin ist eine schnelle Faltung möglich. Diese Faltungsart erlaubt auch eine günstige Unterbringung des Gasgenerators, der auch nachträglich eingesetzt werden kann.

Die Längsachse, um die die Faltung erfolgt, **verläuft vorzugsweise** annähernd senkrecht durch den Einblasmund.

Die Formung und vorübergehende Fixierung des Gassackes im Bereich der vorgesehenen äußeren Hauptfalte bzw. Hauptfalten erfolgt vorzugsweise mittels Druckluft und die Formung und Fixierung des Gassackes im Bereich der vorgesehenen inneren Hauptfalte bzw. Hauptfalten erfolgt vorzugsweise mittels mechanischer Mittel.

In einer speziellen Ausführungsform ist das Verfahren derart ausgestaltet, daß der auf einem Generator-Trägerblech vormontierte Gassack über einen oder mehrere Hohlzylinder gespannt wird, bis er an diesem anliegt und vollständig gestreckt ist. Anschließend werden Faltelemente im Bereich der vorgesehenen inneren Hauptfalte bzw. Hauptfalten an den Gassack herangebracht. Diese fixieren den Gassack an den Stellen, an denen die innere Hauptfalte bzw. die inneren Hauptfalten vorgesehen sind. Dann wird der Hohlzylinder mit Druckluft beaufschlagt, wobei der Gassack an den nicht fixierten Stellen nach außen gedrückt wird. In diesen nach außen gedrückten Abschnitten werden anschließend die äußeren Hauptfalten gebildet. Diese bisher genannten Schritte legen in etwa die Mantelflächen fest, in denen die inneren und äußeren Hauptfalten liegen.

Nach Abschluß dieser vorgenannten Schritte wird dann der Hohlzylinder mit den Faltelementen in Richtung des Generator-Trägerbleches verschoben, wobei die Druckluft entweichen kann. In diesem Verfahrenschritt erfolgt die endgültige Faltung des Gassackes. Nach Beendigung der Faltung werden die Faltelemente und der Hohlzylinder entfernt und anschließend werden eine Abdeckkappe und der Generator montiert.

Eine Vorrichtung zur Durchführung der Verfahren ist dadurch gekennzeichnet, daß **daß Mittel zum Einspannen des Gassacks im Bereich seines Einblasmundes vorgesehen sind,** daß ein **Hohlkörper als** Formkörper für die Vorformung des Gassackes vorgesehen ist, **der durch den Einblasmund in den Gassack einführbar ist** und daß rings um diesen Formkörper im Abstand der vorgesehenen inneren Hauptfalte bzw. Hauptfalten quer zur Längsachse des Formkörpers verschiebbare Faltelemente vorgesehen sind, daß **der Formkörper an seiner Mantelfläche Durchgangsöffnungen aufweist** und dem Formkörper eine Druckgasquelle und/oder eine Absaugvorrichtung zugeordnet ist.

Durch die Durchgangsöffnungen wird Druckluft in den Gassack eingeblasen und dieser in den Bereichen der vorgesehenen äußeren Hauptfalte bzw. Hauptfalten aufgeblasen.

Als Hohlkörper ist in einer bevorzugten Ausführungsform ein Hohlzylinder vorgesehen.

Eine weitere Ausführungsform sieht vor, daß der Formkörper in einer Unterdruckkammer angeordnet ist. In diesem Fall werden die Bereiche des Gassackes, in denen die äußere Hauptfalte bzw. die äußeren Hauptfalten vorgesehen sind, nach außen gezogen.

In einer weiteren Ausführungsform ist ein Formkörper vorgesehen, der auf seiner Mantelfläche Nuten für das Einblasen von Druckluft oder Absaugen von Luft aufweist. In dieser Ausführungsform muß der Formkörper für die Zuführung von Druckluft in den Gassack kein Hohlkörper sein.

Als Faltelemente sind vorzugsweise Faltbleche vorgesehen, die einen gegabelten Abschnitt aufweisen, der dem Verlauf der Mantelfläche des Hohlkörpers angepaßt ist.

Sofern mehrere innere und äußere Hauptfalten vorgesehen sind, liegen die Teile der Gabel in einer Ebene.

Sofern jeweils nur eine innere und äußere Hauptfalte vorgesehen ist, weist der gabelförmige Abschnitt des Faltbleches gegenseitig verschränkte Teile auf. Diese verschränkten Teile bilden bei versetzter Anordnung der Faltbleche eine spiralförmige Linie, die der inneren Hauptfaltlinie entspricht.

Als Faltelemente können auch Seile oder Zangen verwendet werden.

Die Erfindung soll in einem Ausführungsbeispiel anhand von Zeichnungen erläutert werden. Es zeigen:
- Fig. 1: eine geschnittene perspektivische Ansicht eines gefalteten Gassackes;
- Fig. 2: eine Draufsicht auf den ausgebreiteten Gassack mit den vorgesehenen Hauptfalten;
- Fig. 3 - 8: den Ablauf der Faltung;
- Fig. 9: eine Draufsicht auf Faltbleche;
- Fig. 10: die Faltbleche nach Fig. 9 in Arbeitsstellung;
- Fig. 11: einen Längsschnitt durch einen Körper zum Vorformen des Gassackes;
- Fig. 12: einen Querschnitt durch einen Formkörper mit Nuten zum Vorformen des Gassackes;
- Fig. 13a-c: in unterschiedlicher Form gefaltete Gassäcke;
- Fig. 14a,b: einen kegeligen Formkörper und die damit erzielbare Faltung des Gassackes;
- Fig. 15a-c: einen abgestuften Hohlkörper als Formkörper und die damit erzielbaren Faltungen des Gassackes;
- Fig. 16: ein Gassackpaket mit umlaufender Hauptfalte in einer Seitenansicht;
- Fig. 17: der Gassack nach Fig. 18 in einer Draufsicht auf dessen ausgebreitete Oberplatte;
- Fig. 18a,b: eine Vorrichtung zur Faltung nach Fig. 18 mittels umlaufender Schlinge;
- Fig. 19a-c: eine Vorrichtung zur Faltung nach Fig. 18 mittels Faltblechen.

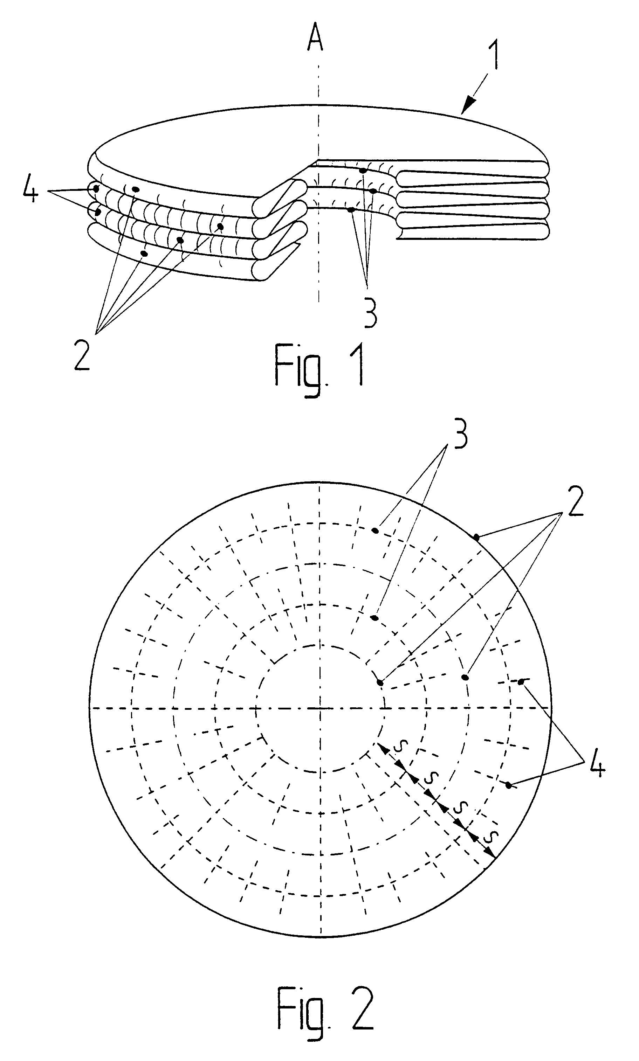

In der Fig. 1 ist eine perspektivische Ansicht eines erfindungsgemäß gefalteten Gassackes 1 dargestellt, der in Richtung einer Längsachse A gefaltet ist. Bei dieser Faltungsart sind äußere Hauptfalten 2 und innere Hauptfalten 3 vorgesehen, die abwechselnd aufeinander folgen. Die Falten liegen im Abstand s zueinander. Die Fig. 2 zeigt den ausgebreiteten Gassack mit den vorgesehenen äußeren und inneren Hauptfalten 2 bzw. 3. Es ist erkennbar, daß die vorgesehenen Hauptfalten auf dem ausgebreiteten Gassack auf geschlossenen Bahnen unterschiedlicher Durchmesser liegen. Da die äußeren bzw. inneren Hauptfalten nach Abschluß der Faltung auf Bahnen mit etwa dem gleichen Durchmesser liegen, entstehen beim Falten des Gassackes außer den gezielt vorgesehenen Hauptfalten auch Nebenfalten 4, die willkürlich entstehen, aber praktisch etwa senkrecht zu den Hauptfalten verlaufen. Diese Nebenfalten 4 bilden sich beim Falten des Gassackes dort am stärksten, wo zur Erzielung der einheitlichen Durchmesser der Bahnen, auf denen die Hauptfalten liegen, das meiste Material zusammengerafft werden muß. Wie die Fig. 2 zeigt, erstrecken sich die Nebenfalten in diesem Bereich von den äußeren Hauptfalten bis zu den inneren Hauptfalten.

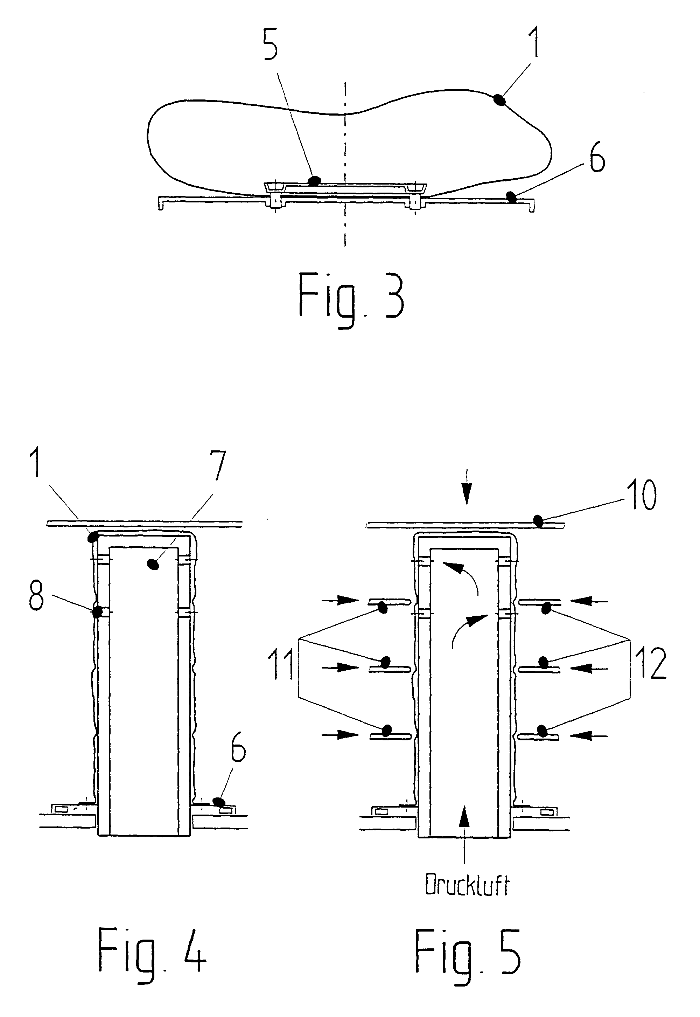

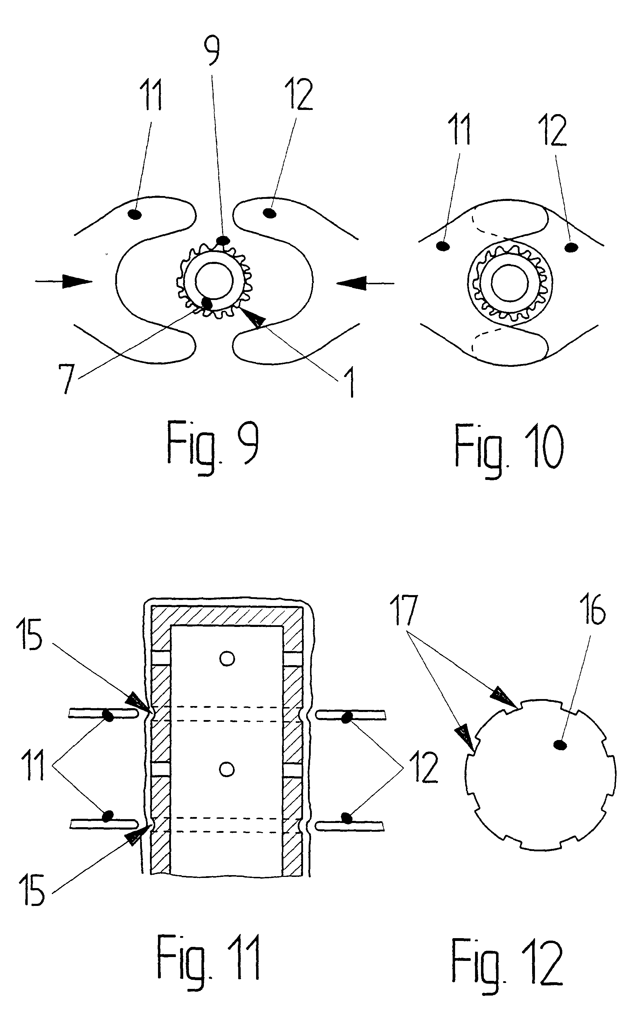

Wie in den Figuren 3 bis 8 dargestellt, erfolgt der Faltvorgang in dem dargestellten Ausführungsbeispiel derart, daß der Gassack 1 im Bereich seines Einblasmundes 5 auf einem Generator-Trägerblech 6 vormontiert wird. Anschließend wird durch den Einblasmund 5 ein Hohlzylinder 7 in den Gassack 1 eingeführt. Dieser Hohlzylinder weist etwa den Durchmesser des Gasgenerators sowie an seinem Umfang zahlreiche Durchgangsöffnungen 8 auf, die vor allem in Ebenen der vorgesehenen äußeren Hauptfalten liegen. Der Hohlzylinder wird soweit in den Gassack eingeführt, bis dieser vollständig gestreckt ist. Der Gassack liegt dann am Hohlzylinder an. Aufgrund der in Fig. 2 dargestellten runden Geometrie des Gassackes 1 entstehen dabei Längsfalten 9 (Fig. 9).

In einem nächsten Schritt wird eine Druckplatte 10 im Bereich der Stirnfläche des Hohlzylinders an den Gassack herangebracht. Weiterhin werden in den Ebenen der vorgesehenen inneren Hauptfalten 3 Faltbleche 11, 12 an den Gassack 1 herangebracht. Die Faltbleche 11, 12 weisen die in der Fig. 9 dargestellte Gabelform und einen solchen Abstand in der Höhe auf, daß sie, wie in Fig. 10 dargestellt, übereinander schiebbar sind und den um den Hohlzylinder 7 gespannten Gassack allseitig umgreifen.

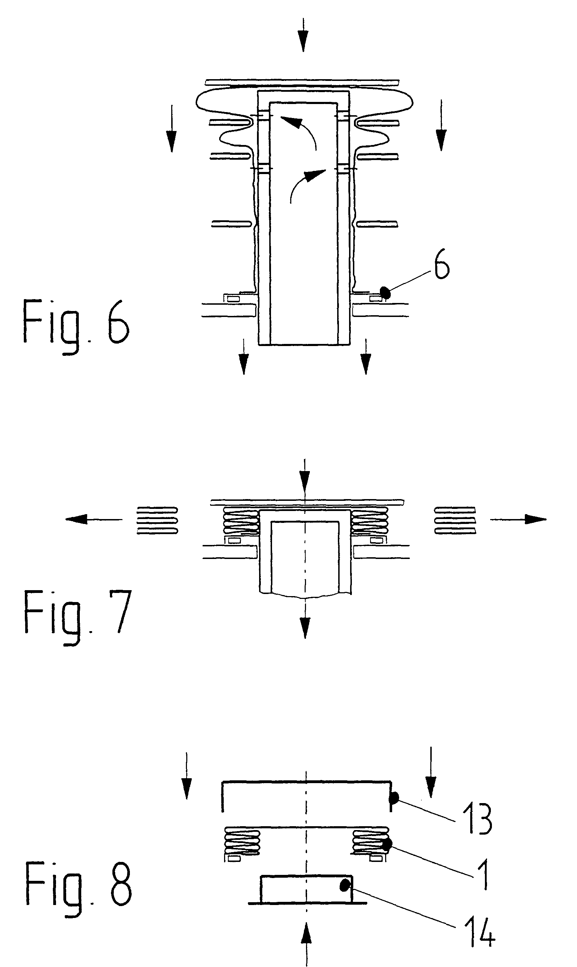

Anschließend wird der Hohlzylinder mit Druckluft beaufschlagt. Diese tritt aus den Durchgangsöffnungen 8 in den Gassack 1 ein und drückt diesen im Bereich der vorgesehenen äußeren Hauptfalten vom Hohlzylinder weg, wie es aus der Fig. 6 ersichtlich ist. Danach wird der Hohlzylinder 7 zusammen mit den Faltblechen 11, 12 und der Druckplatte 10 in Richtung des Generator-Trägerbleches 6 verschoben. Dabei erfolgt die Faltung des Gassackes 1, wobei durch die Lage der Faltbleche 11, 12 und durch die Druckluft der Ort der Hauptfalten festgelegt ist. Während des Faltens wird die Druckluft aus dem Gassack soweit abgelassen, daß der Faltvorgang möglich ist.

Nachdem die Faltung, wie in Fig. 7 dargestellt, abgeschlossen ist, werden die Faltbleche 11, 12, die Druckplatte 10 und der Hohlzylinder 7 entfernt. Anschließend können dann eine Abdeckkappe 13 und der Gasgenerator 14 montiert werden.

Der in Fig. 11 dargestellte Hohlzylinder weist an seinem Umfang im Bereich der Faltbleche 11, 12 umlaufende Einkerbungen 15 auf, in die die Faltbleche eingreifen können. Dadurch wird während des Einführens von Druckluft in den Gassack eine verbesserte Fixierung des Gassackes im Bereich der Faltbleche erreicht.

In der Fig. 12 ist ein Formzylinder 16 dargestellt, der anstelle des Formzylinders 7 verwendbar ist. Dieser Formzylinder, der ebenfalls als Hohlkörper aber auch als Vollkörper ausgebildet sein kann, weist für die Zuführung von Druckluft über seinen Umfang verteilte Nuten 17 auf, die in Richtung der Längsachse des Formzylinders verlaufen.

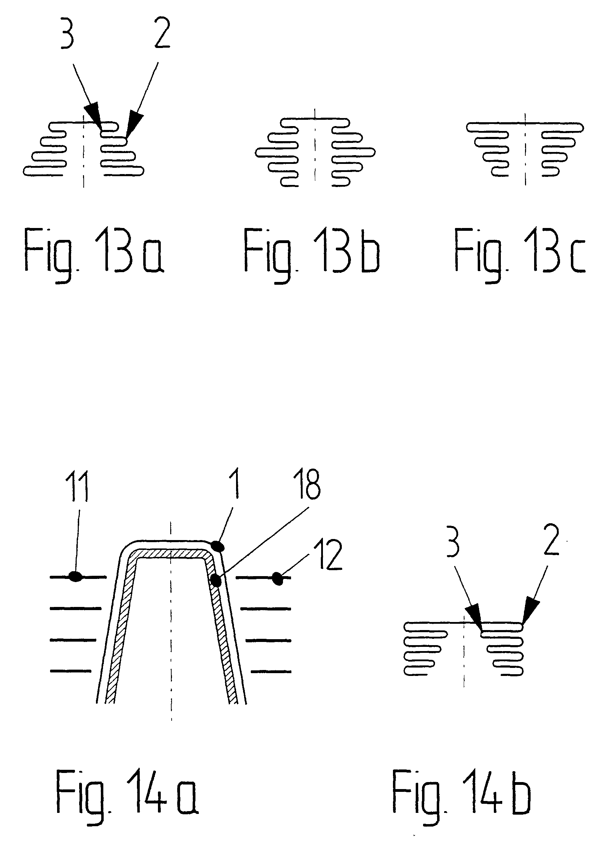

Die Figuren 13a bis 13c zeigen Falten unterschiedlicher Größe, die mittels nicht dargestellter Faltbleche der vorher beschriebenen Art erzielbar sind, die in unterschiedlichen Abständen um einen zylindrichen Formkörper angeordnet sind. Die Abstände der Faltbleche bestimmen die Größe der Falten. Um den Verlauf der äußeren Hauptfalten 2 nach Fig. 13a zu erreichen, müssen die Falbleche vom unteren Bereich des Formkörpers ausgehend nach oben einen kleineren Abstand aufweisen. Für die Faltung nach Fig. 13b ist der Abstand der Faltbleche in der Mitte des Formkörpers am größten und nimmt nach oben und unten ab. Bei der Faltung nach Fig. 13c nimmt der Abstand der Faltbleche von unten nach oben zu.

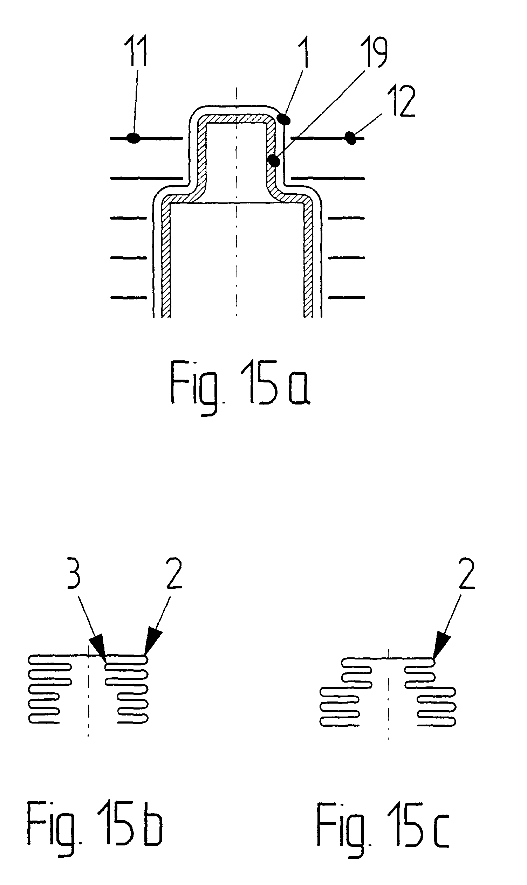

In der Fig. 14a ist ein kegeliger Formkörper 18 mit einem zu faltenden Gassack 1 sowie Faltblechen 11, 12 dargestellt. Die Faltbleche sind von unten nach oben in einem zunehmend größeren Abstand angeordnet, so daß der Gassack in der aus Fig. 14b ersichtlichen Form gefaltet wird, bei der die Falten von unten nach oben größer werden. Während die inneren Hauptfalten 3 auf einem gedachten Kegelmantel liegen, verlaufen die äußeren Hauptfalten 2 auf einem gedachten Zylindermantel.

Beim Ausführungsbeispiel der Fig. 15a ist ein abgestufter Hohlzylinder 19 als Formkörper vorgesehen. Der über diesem angeordnete zu faltende Gassack 1 ist in der vorher beschriebenen Weise von Faltblechen 11, 12 umgeben. Für eine Faltung des Gassackes, wie sie aus Fig. 15b ersichtlich ist, bei der der Verlauf der äußeren Hauptfalten 4 auf einem Zylindermantel liegt, ist im oberen Bereich mit kleinerem Durchmesser der inneren Hauptfalten 3 ein größerer Abstand der Faltbleche untereinander erforderlich. Für eine aus Fig. 15c ersichtliche Faltung des Gassackes mittels des abgestuften Hohlzylinders 19, bei der die äußeren Hauptfalten 4 im Bereich des kleineren Zylinderdurchmessers des Formkörpers ebenfalls einen geringeren Durchmesser aufweisen, ist der Abstand der Faltbleche gleich groß.

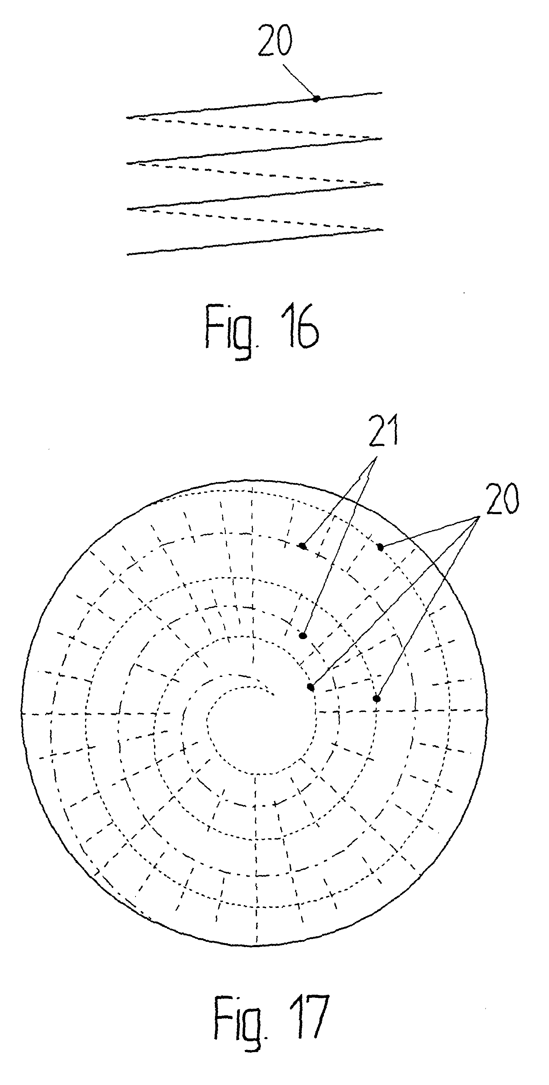

Im Ausführungsbeispiel der Figuren 16 und 17 ist anstelle mehrerer innerer und äußerer Hauptfalten nur eine äußere Hauptfalte 20 und eine innere Hauptfalte 21 vorgesehen. Diese verlaufen spiralförmig auf einem gedachten Zylindermantel, wie es in Fig 16 dargestellt ist. Aus der Darstellung der Fig. 17 mit der Draufsicht auf einen ausgebreiteten Gassack sind die vorgesehenen Hauptfalten 20, 21 erkennbar. Es ist ersichtlich, daß die inneren und äußeren Hauptfalten 20, 21 an den Enden ineinander verlaufen.

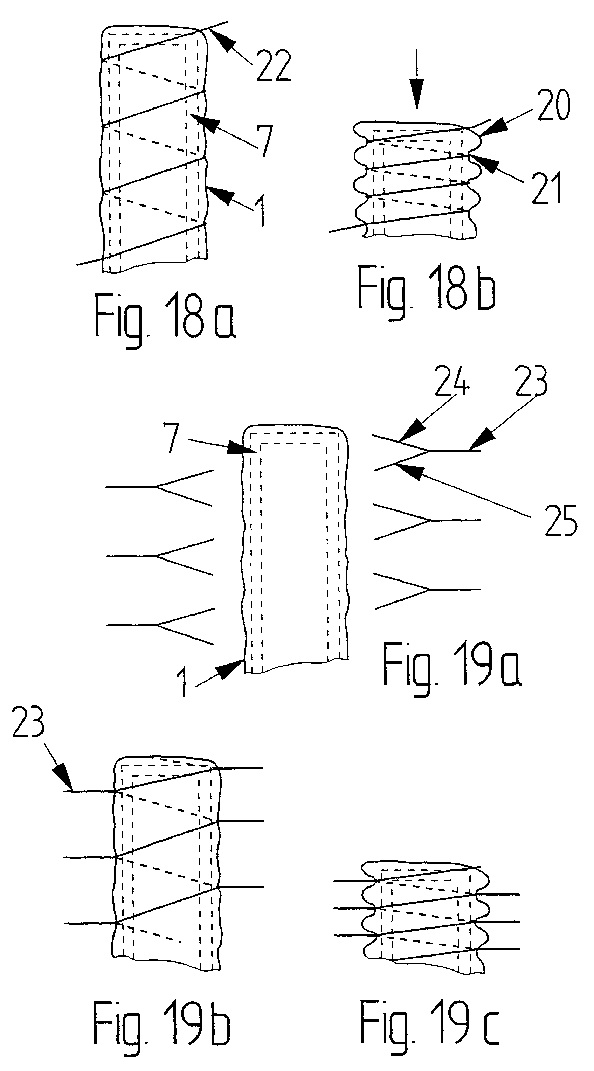

Aus den Figuren 18a und b ist schematisch der Aufbau einer Vorrichtung zur Erzielung einer Faltung nach Fig. 16 ersichtlich. Der leere Gassack wird mittels eines umlaufenden Seiles 22 an der Stelle der vorgesehenen inneren Hauptfalte 21 auf dem Hohlzylinder 7 fixiert. Anschließend wird der Gassack im Bereich der vorgeshenen äußeren Hauptfalte 20 mittels Druckluft vom Hohlzylinder 7 weggedrückt und gleichzeitig oder anschließend zusammengedrückt. Der weitere Verfahrensablauf entspricht dem vorher beschriebenen.

Eine weitere Möglichkeit zur Erzielung der Faltung mit einer inneren und äußeren Hauptfaltlinie ist in den Figuren 19a bis c dargestellt. Dem auf dem Hohlzylinder 7 befindlichen Gassack 1 werden Faltbleche 23 zugeordnet, deren Gabeln zueinander verschränkte Teile 24, 25 aufweisen. Die Gabeln der Faltbleche werden derart verschränkt, daß sich eine spiralförmig, umlaufende Anlage des Gassackes am Formkörper ergibt (Fig. 19b). Die verschränkten Gabeln müssen so beweglich sein, daß die Verschränkung beim Zusammendrücken des Gassackes abnimmt (Fig. 19c).

## Patentansprüche

1. Verfahren zur Faltung eines Gassacks (1), der im gefalteten Zustand mindestens eine innere und eine äußere Hauptfalte (3, 2) aufweist, wobei die letztere (2) in größerem Abstand zur Längsachse (A) als die innere Hauptfalte (3) verläuft,
**dadurch gekennzeichnet,**
**daß** der **im Bereich seines Einblasmundes** (5) eingespannte Gassack **(1) mittels eines durch den Einblasmund (5) in den Gassack eingeführten Formkörpers** (7) so vorgeformt wird, daß er sich in Richtung **der** Längsachse (A) auf der Mantelfläche der vorgesehenen inneren Hauptfalte (3) bzw. Hauptfalten erstreckt, daß der Gassack (1) anschließend im Bereich der vorgesehenen inneren Hauptfalte (3) bzw. Hauptfalten fixiert wird und im Bereich der vorgesehenen äußeren Hauptfalte (2) bzw. Hauptfalten vom Formkörper (7) weg nach außen gedrückt oder gezogen wird und daß der Gassack (1) dann unter gleichzeitiger Entfernung des Formkörpers (7) in Richtung seiner Einspannstelle zusammengedrückt wird.

2. Verfahren nach Anspruch 1, **dadurch gekennzeichnet, daß** die Längsachse (A) annähernd senkrecht durch den Einblasmund (5) verläuft.

3. Verfahren nach Anspruch 1 oder 2, **dadurch gekennzeichnet, daß** die Formung und Fixierung des Gassackes (1) im Bereich der vorgesehenen äußeren Hauptfalte (2) bzw. Hauptfalten mittels Druckluft oder durch Erzeugung eines Unterdrucks erfolgt und daß die Formung und Fixierung des Gassackes (1) im Bereich der vorgesehenen inneren Hauptfalte (3) bzw. Hauptfalten mittels mechanischer Mittel (11, 12) oder durch Erzeugung eines Unterdruckes erfolgt.

4. Verfahren nach mindestens einem der vorhergehenden Ansprüche, **dadurch gekennzeichnet, daß** der auf einem Generator-Trägerblech (6) vormontierte Gassack (1) über einen Hohlzylinder (7) gespannt wird, bis er an diesem anliegt und vollständig gestreckt ist, daß Faltelemente (11, 12) im Bereich der vorgesehenen inneren Hauptfalte (3) bzw. Hauptfalten an den Gassack (1) herangebracht werden, daß anschließend der Hohlzylinder (7) mit Druckluft beaufschlagt wird, daß dann der Hohlzylinder (7) mit den Faltelementen (11, 12) in Richtung des Generator-Trägerbleches (6) geschoben wird, wobei die Druckluft entweichen kann, und daß nach Beendigung der Faltung die Faltelemente (11, 12) und der Hohlzylinder (7) entfernt werden und anschließend eine Abdeckkappe (13) und der Generator (14) montiert werden.

5. Vorrichtung zur Durchführung des Verfahrens nach mindestens einem der Ansprüche 1 bis 4, **dadurch gekennzeichnet, daß Mittel zum Einspannen des Gassacks (1) im Bereich seines Einblasmundes (5) vorgesehen sind**, daß ein Hohlkörper als Formkörper (7, 16) für die Vorformung des Gassackes (1) vorgesehen ist, **der durch den Einblasmund (5) in den Gassack (1) einführbar ist** und daß rings um diesen Formkörper (7, 16) im Abstand der vorgesehenen inneren Hauptfalte (21) bzw. Hauptfalten (3) quer zur Längsachse des Formkörpers (7, 16) verschiebbare Faltelemente (11, 12, 23) vorgesehen sind, daß **der Formkörper (7, 16 an seiner Mantelfläche Durchgangsöffnungen (8) aufweist** und dem Formkörper (7, 16) eine Druckgasquelle und/oder eine Absaugvorrichtung zugeordnet ist.

6. Vorrichtung nach Anspruch 5, **dadurch gekennzeichnet, daß** als Hohlkörper ein Hohlzylinder (7) vorgesehen ist.

7. Vorrichtung nach mindestens einem der Ansprüche 5 und 6, **dadurch gekennzeichnet, daß** der Formkörper in einer Unterdruckkammer angeordnet ist.

8. Vorrichtung nach mindestens einem der Ansprüche 5 bis 7, **dadurch gekennzeichnet, daß** der Formkörper (16) auf seiner Mantelfläche Nuten (17) für das Einblasen von Druckluft oder Absaugen von Luft aufweist.

9. Vorrichtung nach mindestens einem der Ansprüche 5 bis 8, **dadurch gekennzeichnet, daß** als Faltelemente Faltbleche (11, 12) vorgesehen sind, die einen dem Verlauf der Mantelfläche des Formkörpers (7, 16) angepaßten gegabelten Abschnitt aufweisen.

10. Vorrichtung nach mindestens einem der Ansprüche 5 bis 9, **dadurch gekennzeichnet, daß** der gabelförmige Abschnitt des Faltbleches gegenseitig verschränkte Teile (24, 25) aufweist.

11. Vorrichtung nach mindestens einem der Ansprüche 5 bis 10, **dadurch gekennzeichnet, daß** als Faltelemente Seile (22) oder Zangen vorgesehen sind.

## Claims

1. Method for folding an airbag (1) which has in the folded state at least one inner and one outer main fold (3,2) wherein the outer main fold (2) runs at a greater distance from the longitudinal axis (A) than the inner main fold
**characterised in that**
the clamped airbag in the region of its blow-in mouth (5) is pre-shaped by means of a shaping body (7) introduced into the air bag through the blow-in mouth (5) so that it extends in the direction of the longitudinal axis (A) on the sleeve face of the inner main fold (3) or main folds, that the air bag (1) is then fixed in the area of the inner main fold (3) or main folds and is pressed or drawn outwards away from the shaping body (7) in the area of the outer main fold (2) or main folds provided, and that the airbag (1) is then compressed with simultaneous removal of the shaping body (7) in the direction of its clamping point.

2. Method according to Claim 1, **characterised in that** the longitudinal axis (A) extends substantially at right angles to the blow-in mouth (5).

3. Method according to Claim 1 or Claim 2 **characterised in that** the shaping and fixing of the airbag (1) is carried out in the area of the outer main fold (2) or folds by means of compressed air or by production of a sub atmospheric pressure and that the shaping and fixing of the airbag (1) in the area of the inner main fold (3) or folds is carried out by mechanical means (11,12) or through production of a sub-atmospheric pressure.

4. Method according to at least one of the preceding claims, **characterised in that** the airbag (1) prefitted on a generator support plate (6) is tensioned over a hollow cylinder (7) until it is in contact with the cylinder and is completely stretched, that folding elements (11,12) are placed against the airbag (1) in the area of the inner main fold (3) or folds, that the hollow cylinder (7) is then biased with compressed air, that the hollow cylinder (7) is then moved with the folding elements (11,12) towards the generator support plate (6) so that the compressed air can escape and that at the end of the folding the folding elements (11,12) and hollow cylinder (7) are removed and a cover cap (13) and generator (14) are then fitted.

5. Device for carrying out the method according to at least one of claims 1 to 4, **characterised in that** means for tensioning the air bag (1) are provided in the region of its blow-in mouth (5), that a hollow body is provided as shaping body (7,16) for the pre-shaping of the air bag (1) which can be introduced into the airbag (1) through the blow-in mouth (5) and that around the shaping body (7,16) spaced from the inner main fold (21) or folds (3) folding elements (11,12,13) are provided which are slidable transversely to the longitudinal axis of the shaping body (7,16), that the shaping body (7,16) has through openings (8) on its sleeve face and the shaping body (7,16) is associated with a pressurised gas source and/or a suction device.

6. Device according to Claim 5, **characterised in that** a hollow cylinder (7) is provided as hollow body.

7. Device according to at least one of claims 5 and 6, **characterised in that** the shaping body is mounted in an underpressure chamber.

8. Device according to at least one of Claims 5 to 7, **characterised in that** the shaping body (16) has on its sleeve face grooves (17) for blowing in compressed air or sucking out air.

9. Device according to at least one of Claims 5 to 8, **characterised in that** folding plates (11,12) are provided as folding elements which have a forked section matching the shape of the sleeve face of the shaping body (7,16).

10. Device according to at least one of Claims 5 to 9, **characterised in that** the forked section of the folding plate has mutually restricted parts (24,25).

11. Device according to at least one of Claims 5 to 10 **characterised in that** cables (22) or tongs are provided as folding elements.

## Revendications

1. Procédé de pliage d'un coussin gonflable (1) présentant, à l'état plié, au moins des plis principaux intérieur et extérieur (3, 2), ce dernier (2) s'étendant à une plus grande distance de l'axe longitudinal (A) que le pli principal intérieur (3),
**caractérisé par le fait**
**que** le coussin gonflable (1) enserré dans la région de son embout de gonflage (5) est préformé, au moyen d'un corps de formage (7) introduit dans ledit coussin gonflable à travers ledit embout de gonflage (5), de façon telle qu'il s'étende dans la direction de l'axe longitudinal (A) sur la surface de l'enveloppe respective du ou des pli(s) principal (principaux) intérieur(s) (3) prévu(s) ; par le fait que, dans l'enchaînement, le coussin gonflable (1) est consigné à demeure dans la région respective du ou des pli(s) principal (principaux) intérieur(s) (3) prévu(s), puis est poussé ou tiré vers l'extérieur à l'écart du corps de formage (7), dans la région du ou des pli(s) principal (principaux) extérieur(s) (2) prévu(s) ; et par le fait que ledit coussin gonflable (1) est ensuite comprimé dans la direction de sa zone d'enserrement, avec enlèvement simultané dudit corps de formage (7).

2. Procédé selon la revendication 1, **caractérisé par le fait que** l'axe longitudinal (A) s'étend à peu près perpendiculairement à travers l'embout de gonflage (5).

3. Procédé selon la revendication 1 ou 2, **caractérisé par le fait que** le formage et la consignation à demeure du coussin gonflable (1), dans la région du ou des pli(s) principal (principaux) extérieur(s) (2) prévu(s), ont lieu grâce à de l'air comprimé ou par génération d'une dépression ; et **par le fait que** le formage et la consignation à demeure dudit coussin gonflable (1), dans la région du ou des pli(s) principal (principaux) intérieur(s) (3) prévu(s), ont lieu grâce à des moyens mécaniques (11, 12) ou par génération d'une dépression.

4. Procédé selon au moins l'une des revendications précédentes, **caractérisé par le fait que** le coussin gonflable (1), préalablement monté sur une tôle (6) de support d'un générateur, est tendu sur un cylindre creux (7) jusqu'à ce qu'il soit appliqué sur ce dernier, et intégralement étiré ; **par le fait que** des éléments plieurs (11, 12) sont présentés audit coussin gonflable (1) dans la région du ou des pli(s) principal (principaux) intérieur(s) (3) prévu(s) ; **par le fait que**, dans l'enchaînement, le cylindre creux (7) est sollicité par de l'air comprimé ; **par le fait que** ledit cylindre creux (7) est ensuite poussé, avec les éléments plieurs (11, 12), dans la direction de la tôle (6) de support du générateur, sachant que l'air comprimé peut alors s'échapper ; et **par le fait que** les éléments plieurs (11, 12) et le cylindre creux (7) sont enlevés à l'achèvement du pliage, après quoi il est procédé au montage d'une coiffe de recouvrement (13) et du générateur (14).

5. Dispositif pour la mise en oeuvre du procédé selon au moins l'une des revendications 1 à 4, **caractérisé par le fait que** des moyens sont prévus pour enserrer le coussin gonflable (1) dans la région de son embout de gonflage (5) ; **par le fait qu'**un corps creux est prévu pour le préformage du coussin gonflable (1), en tant que corps de formage (7, 16) pouvant être introduit dans ledit coussin gonflable (1) à travers l'embout de gonflage (5) ; **par le fait que** des éléments plieurs (11, 12, 23) pouvant coulisser transversalement par rapport à l'axe longitudinal de ce corps de formage (7, 16), à distance du pli principal intérieur (21) ou des plis principaux intérieurs (3) respectivement prévu(s), sont prévus annulairement tout autour dudit corps de formage (7, 16) ; et **par le fait que** le corps de formage (7, 16) comporte des orifices de passage (8) dans la surface de son enveloppe, et une source de gaz comprimé et/ou un dispositif d'aspiration est affecté(e) audit corps de formage (7, 16).

6. Dispositif selon la revendication 5, **caractérisé par le fait qu'**un cylindre creux (7) est prévu en tant que corps creux.

7. Dispositif selon au moins l'une des revendications 5 et 6, **caractérisé par le fait que** le corps de formage est logé dans une chambre à dépression.

8. Dispositif selon au moins l'une des revendications 5 à 7, **caractérisé par le fait que** le corps de formage (16) possède, sur la surface de son enveloppe, des rainures (17) destinées à l'insufflation d'air comprimé ou à l'évacuation d'air par aspiration.

9. Dispositif selon au moins l'une des revendications 5 à 8, **caractérisé par le fait que** des tôles de pliage (11, 12), prévues en tant qu'éléments plieurs, présentent un tronçon fourchu adapté à l'allure de la surface de l'enveloppe du corps de formage (7, 16).

10. Dispositif selon au moins l'une des revendications 5 à 9, **caractérisé par le fait que** le tronçon fourchu de la tôle de pliage comporte des parties (24, 25) rétrécies en sens inverse.

11. Dispositif selon au moins l'une des revendications 5 à 10, **caractérisé par le fait que** des câbles (22) ou des pinces sont prévu(e)s en tant qu'éléments plieurs.
